# DEMANDE DE BREVET EUROPEEN

(11) **EP 1 388 918 A1**
(43) Date de publication de la demande: **11.02.2004**
(21) Numéro de dépôt: 03356121.8
(22) Date de dépôt: 06.08.2003
(51) Int. Cl.: H02G 3/30

(54) **Console de support de chemin de câbles**

(30) Priorité: 09.08.2002 FR 0210167
(71) Demandeur: Hennequin, Bernard, 90000 Belfort (FR)
(72) Inventeur: Hennequin, Bernard, 90000 Belfort (FR)
(74) Mandataire: Maureau, Philippe

(57) **Abrégé**

Cette console (1) comprend deux pièces (10, 11) assemblées déplaçables l'une par rapport à l'autre, une première pièce (10) étant destinée à être fixée à la paroi à équiper et la deuxième pièce (11) pouvant être immobilisée dans différentes positions déterminées par rapport à la première pièce (10).

Selon l'invention, ladite première pièce (10) comprend, au niveau de son bord (20) recevant le chemin de câbles, au moins deux encoches (21) aménagées selon une première direction, propres à recevoir les fils longitudinaux (6) de fond du chemin de câbles, et ladite deuxième pièce (11) comprend au moins deux encoches (30) aménagées selon une deuxième direction formant un angle de l'ordre de quatre-vingt-dix degrés par rapport à la direction des encoches (21) de ladite première pièce (10), ces encoches (30) de ladite deuxième pièce (11) étant également propres à recevoir lesdits fils longitudinaux de fond (6).

## Description

La présente invention concerne une console de support de chemin de câbles.

Il est classique de fixer un chemin de câbles à une paroi au moyen de consoles fixées à cette paroi, recevant le chemin de câbles sur elles, des moyens étant prévus pour fixer le chemin de câbles à ces consoles.

Une console très couramment employée est réalisée en tôle pliée et comprend un rebord de fixation à la paroi à équiper et un rebord de réception du chemin de câbles. Les chemins de câbles pouvant avoir des largeurs très différentes selon le nombre de câbles à acheminer, l'utilisateur doit disposer de séries de consoles de différentes largeurs, adaptées à ces chemins de câbles, ce qui est une contrainte certaine, tant du point de vue de l'utilisation que du point vue des approvisionnements et de la gestion des stocks.

Pour remédier à cet inconvénient, il a été conçu de réaliser une console en deux pièces coulissantes l'une par rapport à l'autre ; une pièce est fixée à la paroi et l'autre peut être immobilisée par rapport à la première pièce dans une pluralité de positions, pour former une console de longueur variable, correspondant à la largeur du chemin de câbles à installer.

Ces consoles impliquent toutefois la mise en place de boulons ou autres pièces de serrage pour réaliser la fixation du chemin de câbles à elles, qui sont relativement difficiles et longues à installer. De plus, les consoles existantes ne permettent pas de positionner facilement et rapidement le chemin de câbles sur la console selon plusieurs emplacements étagés dans une direction perpendiculaire à la direction longitudinale du chemin de câbles, de telle sorte qu'un objet faisant saillie de la paroi à équiper, par exemple un tuyau, puisse être facilement contourné en écartant le chemin de câbles de cette paroi.

La présente invention vise à remédier à l'ensemble de ces inconvénients.

La console qu'elle concerne comprend, de manière connue en soi, deux pièces assemblées déplaçables l'une par rapport à l'autre, une première pièce étant destinée à être fixée à la paroi à équiper et la deuxième pièce pouvant être immobilisée dans différentes positions déterminées par rapport à la première pièce, pour former une console de largeur correspondant au chemin de câbles à installer.

Selon l'invention, ladite première pièce comprend, au niveau de son bord recevant le chemin de câbles, au moins deux encoches aménagées selon une première direction, propres à recevoir les fils longitudinaux de fond du chemin de câbles, et ladite deuxième pièce comprend au moins deux encoches aménagées selon une deuxième direction formant un angle de l'ordre de quatre-vingt-dix degrés par rapport à la direction des encoches de ladite première pièce, ces encoches de ladite deuxième pièce étant également propres à recevoir lesdits fils longitudinaux de fond, ladite deuxième pièce étant mobile par rapport à ladite première pièce entre une position dans laquelle elle ne fait pas obstacle à l'introduction desdits fils longitudinaux de fond dans les encoches de ladite première pièce et une position dans laquelle les encoches qu'elle comprend permettent son engagement autour desdits fils longitudinaux de fond.

Le montage d'un chemin de câbles sur une console selon l'invention est ainsi réalisé de manière particulièrement simple, facile et rapide, en engageant lesdits fils longitudinaux de fond dans les encoches de ladite première pièce, en déplaçant ladite deuxième pièce par rapport à la première pièce de manière à engager cette deuxième pièce autour desdits fils longitudinaux de fond puis en immobilisant cette deuxième pièce par rapport à la première pièce dans cette position d'engagement.

La coopération des encoches permet de maintenir lesdits fils longitudinaux de fond selon deux directions différentes, sensiblement perpendiculaires l'une par rapport à l'autre, ce qui assure une parfaite immobilisation du chemin de câbles sur une console, sans mise en place de boulons ou autres pièces de serrage.

Avantageusement, ladite première pièce comprend un nombre d'encoches supérieur à celui des fils longitudinaux de fond que comprennent les chemins de câbles de plus grande largeur courante. Par exemple, un chemin de câbles de plus grande largeur courante comprend cinq ou six fils longitudinaux de fond, et ladite première pièce peut par exemple comprendre sept encoches ou plus, ce qui permet six, cinq, quatre, trois ou deux positions différentes pour des chemins de câbles à respectivement deux, trois, quatre, cinq ou six fils longitudinaux de fond.

Plusieurs positions d'un chemin de câbles par rapport à une console sont ainsi rendues possibles selon les encoches dans lesquelles les fils longitudinaux de fond d'un chemin de câbles sont engagés, ce qui permet notamment le contournement d'un obstacle que peut présenter la paroi à équiper.

De préférence, les encoches de ladite première pièce sont aménagées selon un pas inférieur à l'entraxe des fils longitudinaux de fond d'un chemin de câbles destiné à être monté sur la console, par exemple selon un demi-pas.

Le nombre de positions possibles d'un chemin de câbles par rapport à une console est ainsi nettement augmenté.

Avantageusement, lorsque la console est prévue pour recevoir des chemin de câbles de plus grande largeur courante, notamment ceux comprenant cinq ou six fils longitudinaux de fond, ou plus, ladite première pièce comprend au moins une encoche de largeur ajustée à celle d'un fil longitudinal de fond du chemin de câbles et d'autres encoches de largeurs supérieures à celle de ces fils longitudinaux de fond.

L'engagement des différents fils dans les différentes encoches est ainsi assuré, nonobstant les imprécisions de positionnement de ces différents fils les uns par rapport aux autres.

De préférence, ladite première direction est une direction perpendiculaire à celle dudit bord destiné à recevoir le chemin de câbles, de sorte que lesdits fils longitudinaux de fond sont engagés dans ces encoches simplement en posant le chemin de câbles sur la console.

Avantageusement, ladite deuxième pièce est coulissante par rapport à ladite première pièce selon une direction parallèle à la direction selon laquelle les encoches de cette deuxième pièce sont aménagées, et cette deuxième pièce comprend au moins quatre encoches dont au moins deux s'ouvrent dans une direction et au moins deux autres s'ouvrent dans une direction opposée à cette direction.

Ladite deuxième pièce peut ainsi être coulissée selon deux directions opposées pour amener les encoches qu'elle comprend en prise avec lesdits fils longitudinaux de fond.

De préférence, ladite première pièce comprend une encoche latérale aménagée du côté de sa partie destinée à venir contre la paroi à équiper, cette encoche latérale étant positionnée de manière à pouvoir recevoir un fil longitudinal latéral que comprend le chemin de câbles au niveau de l'un de ses côtés latéraux, et au moins une des encoches que comprend le bord de réception du chemin de câbles est aménagée par rapport à cette encoche latérale de manière à pouvoir recevoir un fil longitudinal de fond du chemin de câbles lorsque que ledit fil longitudinal latéral est engagé dans ladite encoche latérale.

La console selon l'invention peut ainsi également recevoir des chemins de câbles à un seul fil longitudinal de fond. Pour les chemins de câbles à plus d'un fil longitudinal de fond, la console permet soit un montage du chemin de câbles avec ledit fil longitudinal latéral en prise dans l'encoche latérale, ce qui assure un parfait montage du chemin de câbles, soit, si un obstacle doit être contourné, un montage du chemin de câbles sans engagement dudit fil longitudinal latéral dans ladite encoche latérale.

En outre, la console selon l'invention permet le montage de plusieurs chemins de câbles côte à côte.

Pour sa bonne compréhension, l'invention est à nouveau décrite ci-dessous en référence au dessin schématique annexé représentant, à titre d'exemples non limitatifs, deux formes de réalisation possibles de la console qu'elle concerne.
La figure 1 en est une vue en perspective selon une première forme de réalisation, avec un élément de chemin de câbles pouvant être monté sur elle ;
la figure 2 en est une vue de côté avec ledit élément de chemin de câbles, dans une position permettant l'engagement de cet élément sur elle ;
la figure 3 en est une vue similaire à la figure 2, en position de verrouillage de l'élément de chemin de câbles sur elle ;
la figure 4 en est une vue similaire à la figure 3 en position de verrouillage d'un élément de chemin de câbles de plus grande largeur, et
la figure 5 en est une vue de côté, à l'état démonté, selon une deuxième forme de réalisation, avec un élément de chemin de câbles pouvant être monté sur elle.

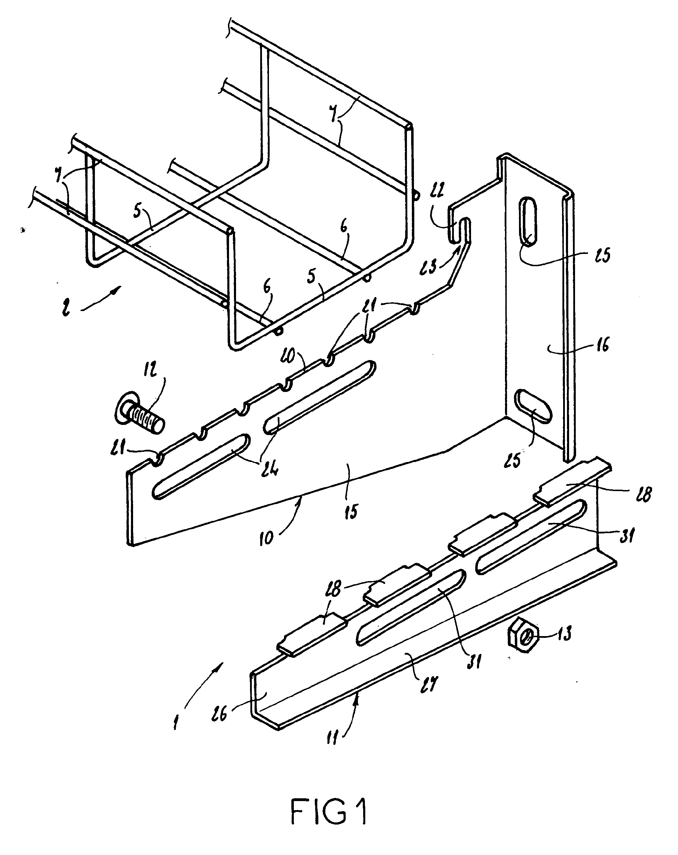

La figure 1 représente une console 1 permettant le montage d'un chemin de câbles sur une paroi à équiper, et un élément 2 de chemin de câbles formant, avec d'autres éléments 2 identiques, ce chemin de câbles.

L'élément 2 est formé de fils métalliques assemblés, à savoir des fils transversaux 5 en forme de "U", des fils longitudinaux de fond 6 et des fils longitudinaux latéraux 7. Dans l'exemple représenté, l'élément 2 comprend deux fils 6 mais il existe des éléments 2 de différentes largeurs selon la quantité de câbles concernée ; la console 1 peut recevoir des éléments 2 comprenant de un à au moins six fils 6, ainsi que cela apparaîtra plus loin.

Plusieurs éléments 2 sont aboutés pour constituer le chemin de câbles, chaque élément 2 étant relié à un élément 2 consécutif au moyen de pièces d'assemblage ou d'éclisses, connues en elles-mêmes et donc non particulièrement décrites.

La console 1 comprend deux pièces 10, 11 assemblées l'une à l'autre au moyen de vis 12 et d'écrous 13.

La pièce 10 est formée par découpage et pliage d'un flan de tôle et comprend une partie principale 15 propre à recevoir le chemin de câbles et une partie latérale 16 permettant son montage sur la paroi à équiper.

La partie 15 forme un bord rectiligne 20 destiné à recevoir le chemin de câbles et comprend, dans l'exemple représenté, sept encoches 21 aménagées à partir de ce bord 20, orientées selon une direction perpendiculaire à ce dernier. Les encoches 21 sont dimensionnées pour recevoir les fils 6 et sont aménagées selon un pas régulier correspondant à la moitié de l'entraxe de ces fils 6; cet entraxe étant couramment de 50 mm, la distance entre deux encoches 21 consécutives est par conséquent de 25 mm.

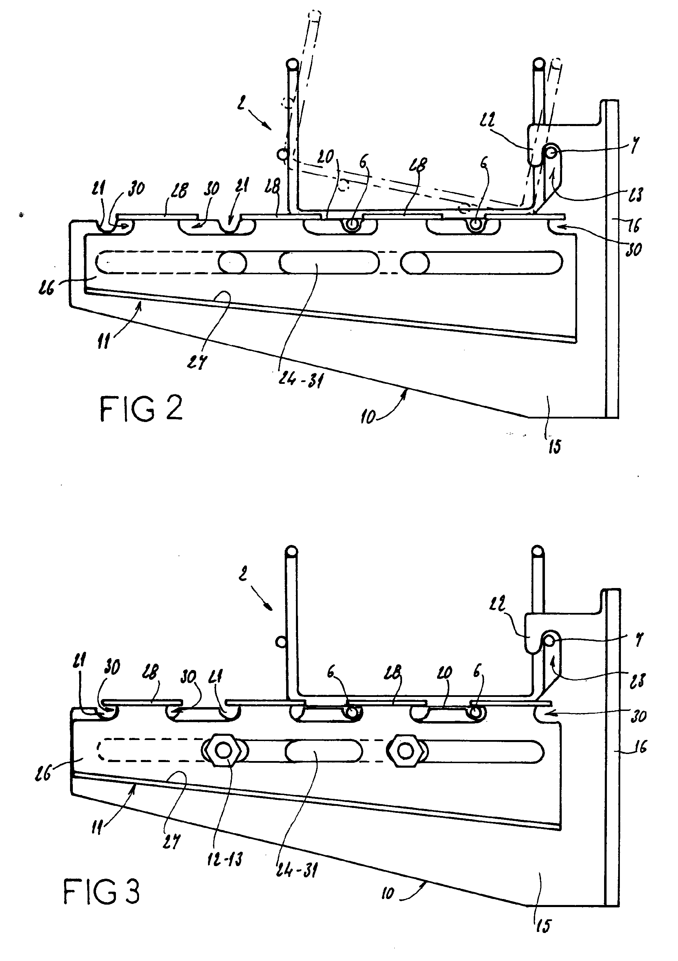

La partie 15 comprend de plus une zone recourbée 22 proche de la partie 16, délimitant une encoche latérale 23 orientée selon une direction opposée à celle selon laquelle sont orientées les encoches 21. Comme cela apparaît sur les figures 2 à 4, cette encoche 23 est positionnée de manière à recevoir le fil latéral médian 7 de l'élément 2 pendant que tout ou partie des encoches 21 reçoivent les fils 6.

La partie 15 comprend en outre deux lumières consécutives 24 aménagées parallèlement au bord 20, destinées à être traversées par les vis 12.

La partie 16 comprend quant à elle deux lumières 25 pour la réception de vis de fixation de la console 1 à la paroi à équiper.

La pièce 11 est également obtenue par découpage et pliage d'un flan de tôle métallique, et comprend une partie principale 26 formant un bord rectiligne, un rebord inférieur 27 replié à 90 degrés par rapport à cette partie principale 26, dont il permet la rigidification, et des languettes 28 prolongeant ledit bord rectiligne, également repliées à 90 degrés par rapport à la partie principale 26.

Comme cela apparaît plus particulièrement sur les figures 2 à 4, la partie 26 comprend des encoches 30 aménagées au niveau dudit bord rectiligne, délimitées par elle et par les languettes 28, ces encoches 30 étant aménagées selon une direction parallèle à ce bord. Après assemblage à la pièce 10, ces encoches 30 sont orientées selon une direction perpendiculaire à celle des encoches 21.

Les encoches 30 sont aménagées selon le même pas que les encoches 21, et sont orientées selon deux directions opposées, celles s'ouvrant selon une direction étant alternées avec celles s'ouvrant selon la direction opposée.

La partie 26 comprend également deux lumières consécutives 31 parallèles audit bord rectiligne, venant, lorsque les pièces 10, 11 sont assemblées, en coïncidence des lumières 24, et étant également traversées par les vis 12.

Il apparaît sur les figures 2 à 4 que, dans cet état d'assemblage des pièces 10, 11, les encoches 30 peuvent venir en coïncidence des encoches 21 et recevoir également en elles les fils 6 de l'élément 2. Il apparaît également que les languettes 28 se trouvent au-dessus du bord 20, empêchant ainsi que les câbles portent contre ce bord 20, ce qui pourrait endommager les gaines de ces câbles en cas de poids de câbles important.

En pratique, comme le montre la figure 2, lorsque les boulons formés par les vis 12 et les écrous 13 sont desserrés, les pièces 10, 11 peuvent être placées dans une position relative de coulissement dans laquelle les encoches 30 sont décalées par rapport aux encoches 21. L'élément 2 peut alors être monté sur la console 1 par engagement du fil 7 médian dans l'encoche 23 et des fils 6 dans les encoches 21 correspondantes. La pièce 11 peut ensuite être coulissée pour engager les encoches 30 autour des fils 6, comme le montre la figure 3, ce qui permet de verrouiller l'élément 2 sur la console 1, puis les boulons sont serrés pour immobiliser la pièce 11 par rapport à la pièce 10.

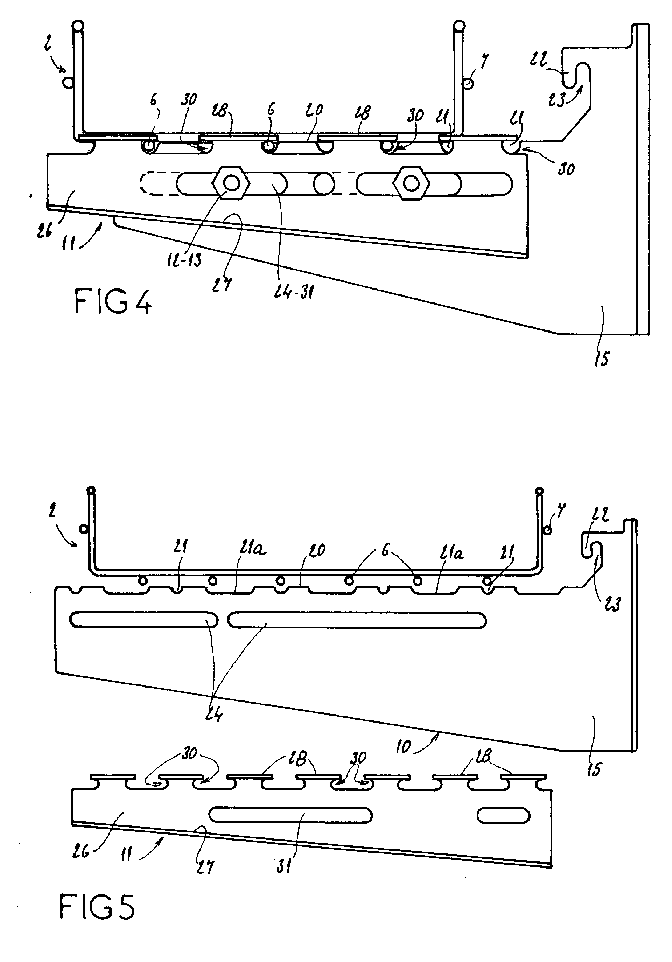

Le nombre d'encoches 21 et la disposition de ces encoches permet le montage sur une même console 1 d'éléments 2 de largeurs très différentes, comme le montrent les figures 2 et 4, et l'utilisation de l'encoche 23 est facultative lorsque l'élément 2 comprend plus d'un fil 6, ainsi que cela apparaît sur la figure 4. Un éventuel obstacle que présenterait la paroi à équiper peut alors être facilement contourné.

Les deux directions selon lesquelles s'ouvrent les encoches 30 permet d'augmenter les possibilités de positionnement de la pièce 11 par rapport à la pièce 10 pour réaliser le verrouillage d'un élément 2, et d'augmenter ainsi la largeur d'éléments 2 qu'une même console 1 peut recevoir.

Il se comprend en outre que plusieurs éléments 2 peuvent être montés côte à côte sur une même console 1, du fait de la large portée que cette dernière peut présenter eu égard au coulissement des deux pièces 10, 11 l'une par rapport à l'autre.

La figure 5 montre une console 1 très similaire à celle qui vient d'être décrite. Les éléments qui se retrouvent de manière identique ou similaire sur cette console ne seront pas décrits à nouveau et seront désignés par les mêmes références numériques.

Dans ce cas, certaines encoches 21 sont identiques aux encoches 21 décrites plus haut et d'autres présentent une largeur importante, résultant, dans l'exemple représenté, de la mise en communication de deux encoches consécutives. Ces encoches 21a de plus grande largeur permettent d'absorber les éventuelles variations de l'entraxe des fils 6 en cas d'éléments 2 de largeur importante.

Ainsi qu'il apparaît de ce qui précède, l'invention apporte une amélioration déterminante à la technique antérieure, en fournissant une console n'impliquant pas, pour réaliser la fixation du chemin de câbles à elle, la mise en place de boulons ou autres pièces de serrage relativement difficiles et longues à installer. De plus, cette console permet de positionner facilement et rapidement le chemin de câbles sur elle selon plusieurs emplacements étagés dans une direction perpendiculaire à la direction longitudinale du chemin de câbles, et permet de placer plusieurs chemin de câbles côte à côte sur elle.

Il va de soi que l'invention n'est pas limitée à la forme de réalisation décrite ci-dessus à titre d'exemple mais qu'elle en embrasse au contraire toutes les variantes de réalisation entrant dans le champ de protection défini par les revendications ci-annexées.

## Revendications

1. Console (1) de support de chemin de câbles, comprenant deux pièces (10, 11) assemblées déplaçables l'une par rapport à l'autre, une première pièce (10) étant destinée à être fixée à la paroi à équiper et la deuxième pièce (11) pouvant être immobilisée dans différentes positions déterminées par rapport à la première pièce (10), pour former une console (1) de largeur correspondant au chemin de câbles à installer ;
console (1) **caractérisée en ce que** ladite première pièce (10) comprend, au niveau de son bord (20) recevant le chemin de câbles, au moins deux encoches (21) aménagées selon une première direction, propres à recevoir les fils longitudinaux (6) de fond du chemin de câbles, et **en ce que** ladite deuxième pièce (11) comprend au moins deux encoches (30) aménagées selon une deuxième direction formant un angle de l'ordre de quatre-vingt-dix degrés par rapport à la direction des encoches (21) de ladite première pièce (10), ces encoches (30) de ladite deuxième pièce (11) étant également propres à recevoir lesdits fils longitudinaux de fond (6), ladite deuxième pièce (11) étant mobile par rapport à ladite première pièce (10) entre une position dans laquelle elle ne fait pas obstacle à l'introduction desdits fils longitudinaux de fond (6) dans les encoches (21) de ladite première pièce (10) et une position dans laquelle les encoches (30) qu'elle comprend permettent son engagement autour desdits fils longitudinaux de fond (6).

2. Console (1) selon la revendication 1, **caractérisée en ce que** ladite première pièce (10) comprend un nombre d'encoches (21) supérieur à celui des fils longitudinaux de fond (6) que comprennent les chemins de câbles de plus grande largeur courante.

3. Console (1) selon la revendication 2, **caractérisée en ce que** les encoches (21) de ladite première pièce (10) sont aménagées selon un pas inférieur à l'entraxe des fils longitudinaux de fond (6) d'un chemin de câbles destiné à être monté sur la console (1), par exemple selon un demi-pas.

4. Console (1) selon la revendication 2 ou la revendication 3, **caractérisée en ce que**, lorsque la console (1) est prévue pour recevoir des chemin de câbles de plus grande largeur courante, notamment ceux comprenant cinq ou six fils longitudinaux de fond (6), ou plus, ladite première pièce (10) comprend au moins une encoche (21) de largeur ajustée à celle d'un fil longitudinal de fond (6) du chemin de câbles et d'autres encoches (21a) de largeurs supérieures à celle de ces fils longitudinaux de fond (6).

5. Console (1) selon l'une des revendications 1 à 4, **caractérisée en ce que** ladite première direction est une direction perpendiculaire à celle dudit bord (20) destiné à recevoir le chemin de câbles, de sorte que lesdits fils longitudinaux de fond (6) sont engagés dans ces encoches (21) simplement en posant le chemin de câbles sur la console (1).

6. Console (1) selon l'une des revendications 1 à 5, **caractérisée en ce que** ladite deuxième pièce (11) est coulissante par rapport à ladite première pièce (10) selon une direction parallèle à la direction selon laquelle les encoches (30) de cette deuxième pièce (11) sont aménagées, et **en ce que** cette deuxième pièce (11) comprend au moins quatre encoches (30) dont au moins deux s'ouvrent dans une direction et au moins deux autres s'ouvrent dans une direction opposée à cette direction.

7. Console (1) selon l'une des revendications 1 à 6, **caractérisée en ce que** ladite première pièce (10) comprend une encoche latérale (23) aménagée du côté de sa partie (16) destinée à venir contre la paroi à équiper, cette encoche latérale (23) étant positionnée de manière à pouvoir recevoir un fil longitudinal latéral (7) que comprend le chemin de câbles au niveau de l'un de ses côtés latéraux, et au moins une des encoches (21) que comprend le bord (20) de réception du chemin de câbles est aménagée par rapport à cette encoche latérale (23) de manière à pouvoir recevoir un fil longitudinal de fond (6) du chemin de câbles lorsque que ledit fil longitudinal latéral (7) est engagé dans ladite encoche latérale (23).

8. Console (1) selon l'une des revendications 1 à 7, **caractérisée en ce que** ladite deuxième pièce (11) comprend un bord rectiligne à partir duquel sont aménagées les encoches (30) de cette pièce, et des languettes (28) prolongeant ce bord rectiligne, repliées à 90 degrés par rapport à la partie principale (26) de cette deuxième pièce (11), les languettes (28) se trouvant, lorsque les deux pièces (10, 11) de la console (1) sont assemblées l'une à l'autre, au-dessus du bord rectiligne (20) que comprend ladite première pièce (10) pour recevoir le chemin de câble.
